# EUROPEAN PATENT SPECIFICATION

(11) **EP 1 987 668 B1**
(45) Date of publication and mention of the grant of the patent: **02.11.2011**
(21) Application number: 07717643.6
(22) Date of filing: 21.02.2007
(51) Int. Cl.: H04N 5/44, H04N 5/50, H04N 7/24

(54) **RAPID TUNING IN MULTIMEDIA APPLICATIONS**
SCHNELLE ABSTIMMUNG IN MULTIMEDIA-ANWENDUNGEN
AJUSTEMENT RAPIDE DANS DES APPLICATIONS MULTIMEDIA

(30) Priority: 21.02.2006 US 775441 P
(43) Date of publication of application: 05.11.2008
(60) Divisional application: 10187755.3
(73) Proprietor: QUALCOMM Incorporated, San Diego, CA 92121 (US)
(72) Inventor: WALKER, Gordon Kent, Poway, California 92064 (US); RAVEENDRAN, Vijayalakshmi R., San Diego, California 92130 (US); DEVICO, Michael, San Diego, California 92130 (US)
(74) Representative: Heselberger, Johannes
(86) International application number: PCT/US2007/062523
(87) International publication number: WO 2007/098480

(56) References cited:
- EP-A- 1 107 601
- EP-A- 1 389 874
- WO-A-02/080590
- WO-A2-2005/043310
- US-A1- 2002 184 637
- US-A1- 2005 094 733
- US-B1- 6 490 001

## Description

### Claim of Priority under 35 U.S.C. §119

The present Application for Patent claims priority to Provisional Application No. 60/775,441 entitled "RAPID TUNING AND SCAN VIA LAYER SYNCHRONIZATION FOR MULTIMEDIA" filed February 21, 2006, and assigned to the assignee hereof and hereby expressly incorporated by reference herein.

### BACKGROUND

### FIELD

The present disclosure relates generally to telecommunication systems, and more particularly, to concepts and techniques for rapid tuning in multimedia applications.

### BACKGROUND

Digital video and audio compression technologies have ushered in an era of explosive growth in digital multimedia distribution. Since the early 1990's, international standards groups such as, for example, the Video Coding Experts Group (VCEG) of ITU-T and the Motion Pictures Expert Group of ISO/IEC, have developed international video recording standards. The standards developed include, for example, MPEG-1, MPEG-2, MPEG-4 (collectively referred to as MPEG-x), H.261, H.262, H.263, and H.264 (collectively referred to as H.26x).

The international video recording standards follow what is known as a block-based hybrid video coding approach. In the block-based hybrid video coding approach, pixels serve as the basis for the digital representation of a picture or, as it is commonly called and will be referred to in this disclosure, a frame. A group of pixels form what is known as a block. A common block size for performing digital compression operations is known as the macroblock. Macroblocks are made up of 16x16 pixels. Sub-macroblocks are made up of smaller sets of pixels including, for example, 16x8, 8x16, 8x8, 8x4, 4x8, and 4x4 pixels. Compression operations can also be performed on sub-macroblocks, therefore in order to not obscure the various concepts described herein, the operations will be discussed as operating on portions of a frame which can include all block sizes or groups of block sizes. A group of macroblocks form what is known as a slice. Slices can be made up of contiguous macroblocks in the form of, for example, a row, a column, a square, or a rectangle. Slices can also be made up of separated macroblocks or a combination of separated and contiguous macroblocks. Slices are grouped together to form a frame in a video sequence.

The MPEG-x and H.26x standards describe data processing and manipulation techniques that are well suited for the compression and delivery of video, audio and other information using fixed or variable length source coding techniques. In particular, the above-referenced standards, and other hybrid coding standards and techniques will compress video information using Intra-frame coding techniques (such as, for example, run-lcngth coding, Huffman coding and the like) and Inter-frame coding techniques (such as, for example, forward and backward predictive coding, motion compensation and the like). Specifically, in the case of video processing systems, hybrid video processing systems are characterized by prediction-based compression encoding of video frames with Intra-frame and/or Inter-frame motion compensation encoding.

Inter-frame prediction coding exploits the fact that there are very few differences between two adjacent frames in a video sequence. Often the only difference is that some parts of the image have shifted slightly between frames. Inter-frame prediction coding can be used to partition a current frame into macroblocks and search an adjacent frame, or reference frame, to determine whether the macroblock has moved. If the content of the macroblock in the current frame can be located in a reference frame, then it does not need to be reproduced. The content can be represented by a "motion vector" indicating its displacement in the current frame from its position in the reference frame and the difference between the two macroblocks. Prediction coding techniques may be applied to the motion vector and the difference information before being recorded or transmitted.

A frame with Intra-frame prediction coding that is performed without reference to an adjacent frame is called an "I-frame," or an "intra-coded video frame." A frame with Inter-picture prediction coding that is performed with reference to a single frame is called a "P-frame." A frame with Inter-picture prediction coding that is performed by referring simultaneously to two frames is called a "B-frame." Two frames whose display time is either forward or backward to that of a current frame can be selected arbitrarily as reference for coding a B-frame. The reference frames can be specified for each macroblock of the frame. Both a P-frame and a B-frame is referred to as an "inter-coded video frame."

Decoding of an Inter-frame with prediction coding cannot be accomplished unless the frame upon which the current frame references has been previously decoded. Hence, the video sequence in the form of downloaded files or streaming media cannot be played back instantaneously. Instead, decoding may start only at a Random Access Points (RAP) within the video sequence. A RAP is a frame that can be decoded without relying on a reference frame, such as an I-frame. In video streaming applications, the inability to decode the video sequence instantancously may adversely impact the user's experience. For example, when a user is channel surfing, an undesirable delay may be encountered on each channel as the decoder waits for a RAP to join the video sequence.

One possible solution is to increase the number of RAPs in the video stream. This solution, however, reduces the compression of the video sequence causing the data rate to increase significantly. Accordingly, there is a need in the art for an improved method for acquiring a video sequence without comprising video compression.

US 2005/094733 (A1) relates to digital television having improved channel surfing ability. At least the "I" and "P" frames of an MPEG transport stream are buffered for as many program streams as memory permits. A pointer tracks where the last "I" frame of each program stream is in memory. Since the last "I" frame and subsequent "P" frames of a program stream are available, channel changes within the current MPEG transport stream are speed up by allowing any "P" frame to start a newly selected program stream. Extra memory enables buffering of all of the "I", "P" and "B" frames of a program stream. Extra tuners can enable selection of multiple MPEG transport streams. Intelligent choices of MPEG transport streams can speed surfing across transport streams.

WO 2005/043310 (A2) relates to techniques to seamlessly switch reception between multimedia programs. For "continued decoding", a wireless device continues to receive, (channel) decode, (video) decompress, and (optionally) display a current program, even after a new program has been selected, until overhead information needed to (channel) decode the new program is received. After receiving the overhead information, the wireless device (channel) decodes the new program but continues to (video) decompress the current program. The wireless device (video) decompresses the new program after (channel) decoding this program. For "early decoding", the wireless device receives a user input and identifies a program with potential for user selection. The identified program may be the one highlighted by the user input or a program anticipated to be selected based on the user input. The wireless device initiates (channel) decoding of the identified program, prior to its selection, so that the program can be (video) decompressed and displayed earlier if it is subsequently selected.

### SUMMARY

The invention is defined by the independent claims. An aspect of a wireless communications device is disclosed. The wireless communications device includes a receiver configured to receive a plurality of video streams each comprising intra-coded and inter-coded video frames, a video decoder, and a processing unit configured to switch the video streams to the video decoder. The processing unit is further configured to receive a prompt to switch from a first one of the video streams to a second one of the video streams, and in response to the prompt, delay switching to the second one of the video streams until an intra-coded video frame is received in the second one of the video streams.

Another aspect of a wireless communications device is disclosed. The wireless communications device includes receiving means for receiving a plurality of video streams each comprising intra-coded and inter-coded video frames, decoding means for decoding video, and switching means for switching the video streams to the decoding means, the switching means being configured to receive a prompt to switch from a first one of the video streams to a second one of the video streams, and in response to the prompt, delay switching to the second one of the video streams until an intra-coded video frame is received in the second one of the video streams.

An aspect of a method for communicating is disclosed. The method includes receiving a plurality of video streams each comprising intra-coded and inter-coded video frames, decoding a first one of the video streams, receiving a prompt to decode a second one of the video streams, and in response to the prompt, delay switching to the second one of the video streams to decode until an intra-coded video frame is received in the second one of the video streams.

An aspect of a computer program product is disclosed. The computer program product includes computer-readable medium. The computer-readable medium includes switching code to cause a computer to switch a plurality of video streams to a video decoder, each of the video streams comprising intra-coded and inter-coded video frames, the switching code further being configured to receive a prompt to switch from a first one of the video streams to a second one of the video streams, and in response to the prompt, delay switching to the second one of the video streams until an intra-coded video frame is received in the second one of the video streams.

### BRIEF DESCRIPTION OF THE DRAWINGS

Various aspects of a wireless communications system are illustrated by way of example, and not by way of limitation, in the accompanying drawings, wherein:

FIG. 1 is a conceptual block diagram illustrating an example of a multimedia broadcast system;

FTG. 2 is a conceptual block diagram illustrating an example of a prediction-based compression video encoder for a video stream;

FIG. 3 is an illustrating of an example of a data structure for a video stream output from the video encoder;

FIG. 4 is a diagram illustrating an example of a data structure for a super-frame in the time domain;

FIG. 5 is a diagram illustrating an example of the various protocol layers for one media logical channel in one super-frame;

FIG. 6 is a block diagram illustrating an example of a transmitter in the distribution network;

FIG. 7 is a block diagram illustrating an example of a wireless communications device

FIG. 8 is a diagram illustrating an example of the various protocol layers for one media logical channel in one super-frame with the application layer synchronized the super-frame; and

FIG. 9 is a block diagram illustrating an example of the functionality of a wireless communications device.

### DETAILED DESCRIPTION

The detailed description set forth below in connection with the appended drawings is intended as a description of various configurations of the invention and is not intended to represent the only configurations in which the invention may be practiced. The detailed description includes specific details for the purpose of providing a thorough understanding of the invention. However, it will be apparent to those skilled in the art that the invention may be practiced without these specific details. In some instances, well known structures and components are shown in block diagram form in order to avoid obscuring the concepts of the invention.

Various techniques described throughout this disclosure will be described in the context of a wireless multimedia broadcast system. As used herein, "broadcast" and "broadcasting" refer to transmission of multimedia content to a group of users of any size and includes broadcast, anycast, multicast, unicast, datacast, and/or any other suitable communication session. One example of such a broadcast system is Qualcomm's MediaFLO technology. Media-FLO uses an orthogonal frequency division multiplexing (OFDM)-based air interface designed specifically for multicasting a significant volume of rich multimedia content cost effectively to wireless subscribers. MediaFLO is merely an example of the type of multimedia broadcast system described herein and other, functionally equivalent multimedia broadcast systems are contemplated as well.

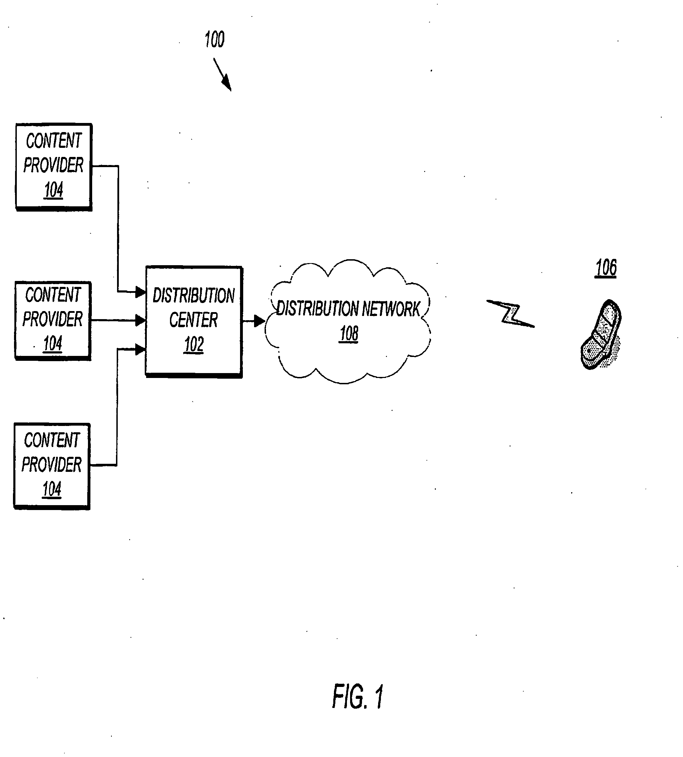

FIG. 1 is a conceptual block diagram illustrating an example of a multimedia broadcast system. The broadcast systems may be a MediaFLO system, a Digital Video Broadcasting for Handhelds (DVB-H) system, a Terrestrial Digital Media Broadcasting (T-DMB) system, an Integrated Services Digital Broadcasting for Terrestrial Television Broadcasting (ISDB-T) system, or any other broadcast system that may be used to support multimedia broadcasts over wireless networks.

The broadcast system 100 is shown with a distribution center 102 which serves as an access point for various content providers 104. A content provider is a company, media center, server, or other entity capable of providing content to a number of wireless communication devices 106 through the broadcast system 100. The content from a content provider 104 is commonly referred to as a service. A service is an aggregation of one or more independent data components. Each independent data component of a service is called a flow and may include a video component, audio component, text component, signaling component, or some other component of a service. Each flow is carried in a stream. The streams for each service are transmitted through the physical layer of the broadcast system 100 on a media logical channel. In this example, the distribution center 102 is responsible for mapping the media streams to each media logical channel for distribution to wireless communication devices through a distribution network 108. A wireless communications device 106 may be a mobile telephone, a personal digital assistant (PDA), a mobile television, a personal computer, a laptop computer, a game console, or other device capable of receiving multimedia content.

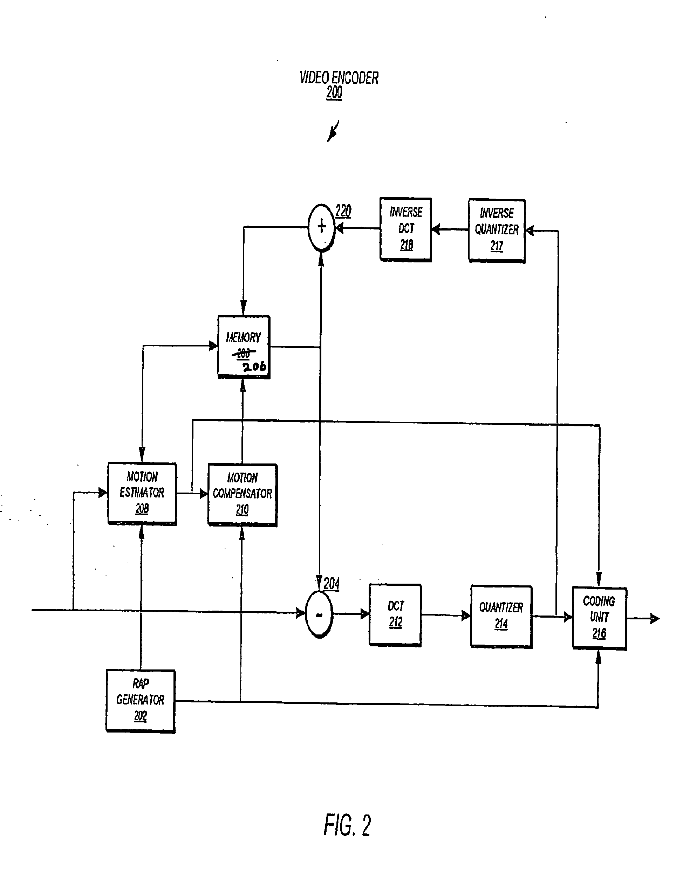

FIG. 2 is a conceptual block diagram illustrating an example of a prediction-based compression video encoder 200 for a video stream. Typically, the video encoder 200 will be implemented at the content provider, but alternatively, may be implemented at the distribution center or anywhere in the distribution network.

The video encoder 200 includes a subtractor 204 which computes the differences between a video frame and a reference frame stored in memory 206. The differences are computed on a macroblock-by-macroblock basis using a motion estimator 208 and a motion compensator 210. The motion estimator 208 receives a macroblock from a current video frame and searches a reference frame in memory 206 for a corresponding macroblock. Once located, the motion estimator 208 generates a motion vector to represent the displacement of the macroblock in the current video frame from its position in the reference frame. The motion vector is used by the motion compensator 210 to retrieve from memory 206 the corresponding macroblock from the reference frame, which is then subtracted from the macroblock from the current video frame to produce residual information (i.e., information representing the difference between the two). The residual information is transformed by a Discrete Cosine Transform (DCT) 212 into discrete spatial frequency coefficients, quantized by a quantizer 214, and provided to a coding unit 216 for further compression.

The current video frame processed by the video encoder 200 should be stored in the memory 206 so that it can be used later as a reference frame. Instead of simply copying the current video frame into memory 206, the quantized transform coefficients are processed by an inverse quantizer 217 and an inverse transform 218 before being summed with the macroblocks of the reference frame by an adder 220. This process ensures that the contents of the current video frame stored in memory 206 is identical to the frame reconstructed by the wireless communication devices.

A RAP generator 202 instructs the motion estimator 208 and motion compensator 210 to code each frame of video as an I, P, or B-frame. In the case of an **I-**frame, the motion estimator 208 does not need to generate a motion vector and the motion compensator 210 does not need to retrieve macroblocks of a reference frame from memory 206. Rather, the macroblocks for the current video frame are passed directly through the substractor 106 to the DCT 212. The RAP generator 202 also provides a signal to the coding unit 216 indicating whether the frame is an I, P, or B frame. The signal is part of a header for each video frame.

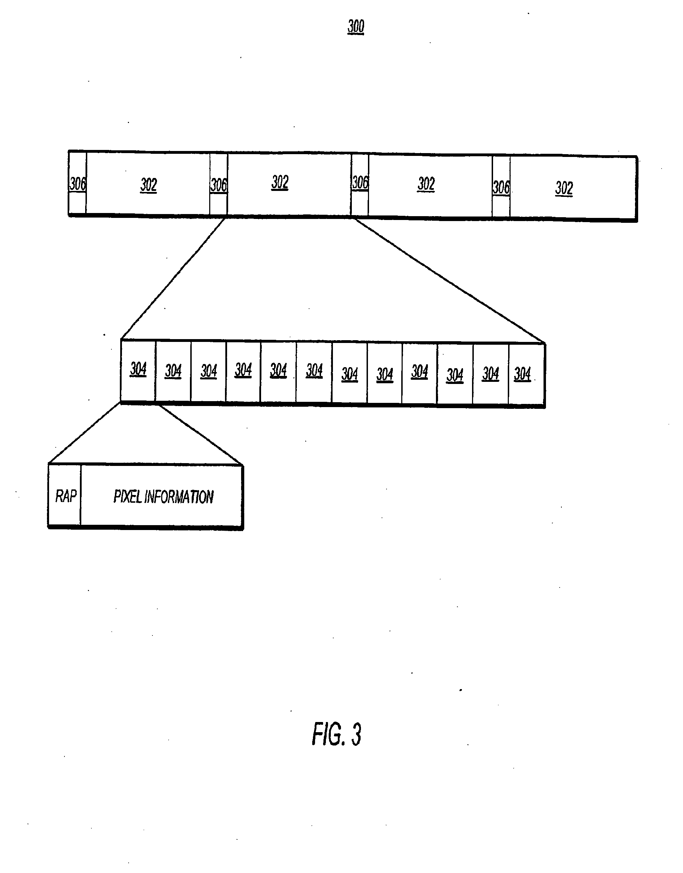

FIG. 3 is an illustrating of an example of a data structure for a video stream output from the video encoder. The video stream 300 g includes a number of video frames 404 arranged into a Group of Pictures (GOP) 304. A GOP 302 consists of all video frames 304 that follow a GOP header 306 before another GOP header 306. The GOP layer, although not required, allows random access of the video stream by a decoder because the first frame after the GOP header 306 is an I-frame. Alternatively, or in addition to, a decoder can acquire the video stream via the RAP signal contained in the headers of the I-frames in the GOP.

A wireless communication device 106 moving through the broadcast system 100 may be configured to receive a service containing one or more streams from the distribution network 108 using any suitable wireless interface. One non-limiting example of a wireless interface uses multiple subcarriers, such as orthogonal frequency division multiplexing (OFDM). OFDM is a multi-carricr modulation technique effectively partitions overall system bandwidth into multiple (N) sub-carriers. These sub-carriers, which are also referred to as tones, bins, frequency channels, etc., are spaced apart at precise frequencies to provide orthogonality. Content may be modulated onto the sub-carriers by adjusting each sub-carrier's phase, amplitude or both. Typically, quadrature phase shift keying (QPSK) or quadrature amplitude modulation (QAM) is used, but other modulation schemes may also be used.

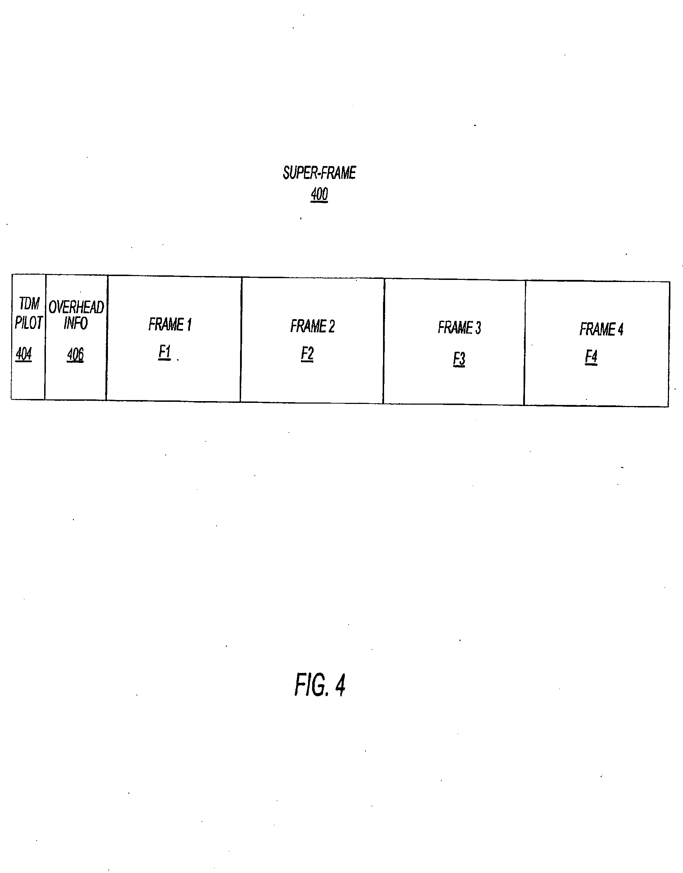

In OFDM wireless interfaces, content is generally broadcast in super-frames. FIG. 4 is a diagram illustrating an example of a data structure for a super-frame in the time domain. The super-frame 400 includes four frames F1-F4. The media logical channels are broadcast in the four frames F1-F4. Each media logical channel may be allocated a fixed or variable number of time slots in each super-frame 400 depending on the payload, the availability of time slots in the super-frame, and possibly other factors. Each time slot in the super-frame 400 may include one or more OFDM symbols. An OFDM symbol is generated by N modulated sub-carriers. The super-frame 400 also includes a TDM pilot 404 and overhead information 406. The TDM pilot 404 may be used by the wireless communications device for synchronization (e.g., frame detection, frequency error estimation, timing acquisition, and so on) and channel estimation. The overhead information 406 indicates the specific location of each media logical channel within the super-frame 400.

The protocol stack for the multimedia broadcast system described thus far includes an application layer, which resides above a stream layer, which resides above a medium access control (MAC) layer, which resides above a physical layer. The application layer controls the broadcast of the multimedia content, access to the content, encoding, and so on. The stream layer provides binding of application layer packets to the media streams on the media logical channels. The MAC layer performs multiplexing of packets for the different media streams associated with each media logical channel. The physical layer provides a mechanism to broadcast the media streams through various communication channels in the multimedia broadcast system.

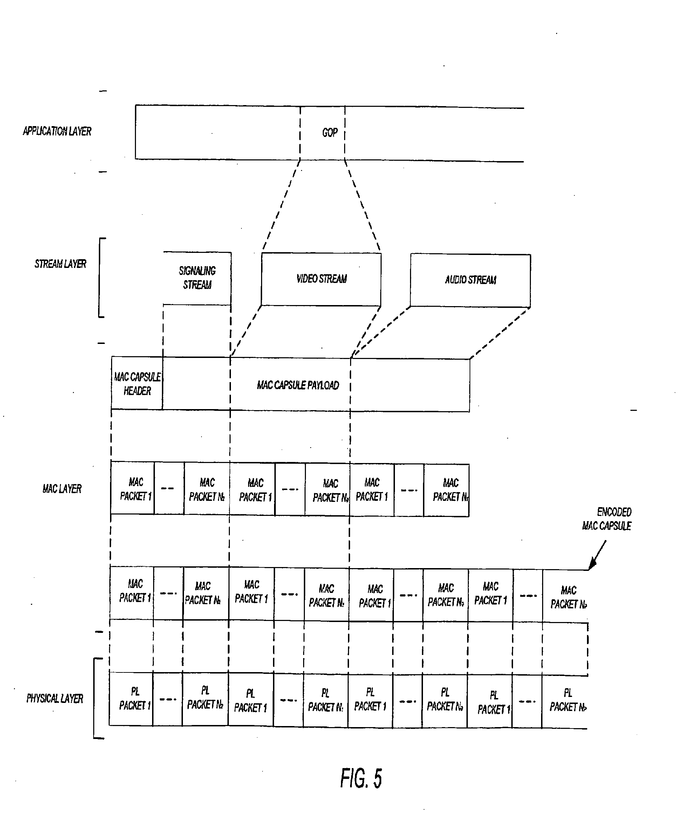

FIG. 5 is a diagram illustrating an example of the various protocol layers for one media logical channel in one super-frame. In this example, the media logical channel includes a signaling stream, video stream, and audio stream. The stream layer provides one stream layer packet for each media stream broadcast on the media logical channel in a super-frame. Typically, the video stream packet will include a fragment of a GOP, but may include an entire GOP or concatenated GOPs.

The MAC layer forms a MAC capsule for the media logical channel for each super-frame. The MAC capsule includes a MAC capsule header and MAC capsule payload. The MAC capsule header carries embedded overhead information for the media logical channel, which includes the location of the media logical channel in the next super-frame. The MAC capsule payload carries the stream layer packets to be broadcast in the super-frame for the media logical channel.

The MAC layer also fragments the MAC capsule into multiple MAC packets. In this example, the MAC capsule header and signaling stream packet are divided into No MAC packets, the video stream packet is divided into N₁ MAC packets, and the audio stream packet is divided into N₂ MAC packets. To facilitate independent reception of the media streams, each stream layer packet is sent in an integer number of MAC packets.

The MAC layer also performs block encoding on the MAC packets for the media logical channel and generates Nₚ parity MAC packets. The parity MAC packets are appended to the block of MAC packets to create an encoded MAC capsule. The physical layer receives the encoded MAC capsule and processes (e.g., encodes, interleaves, and symbol maps) each MAC packet to generate a corresponding physical layer packet.

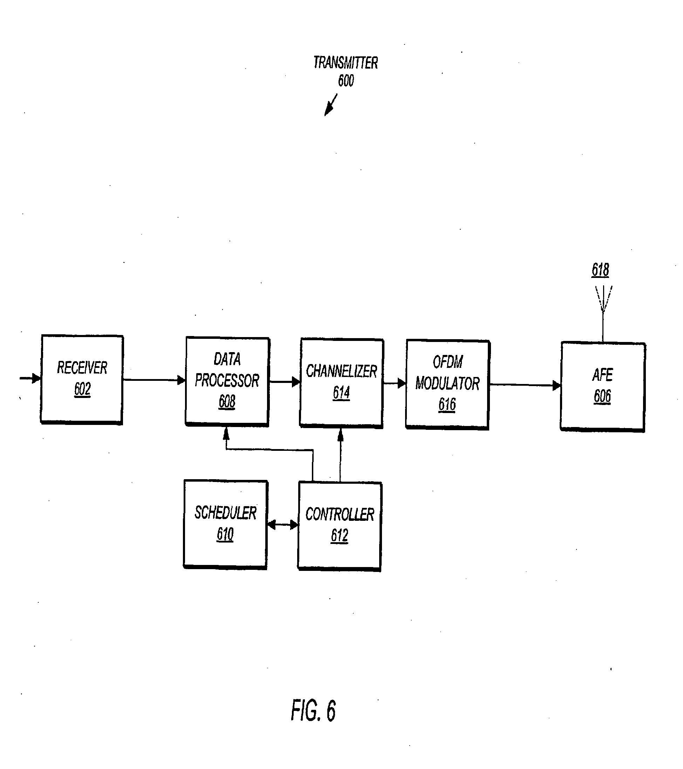

FIG. 6 is a block diagram illustrating an example of a transmitter in the distribution network. The transmitter 600 includes a receiver 602, which receives the media streams broadcast on each media logical channel and provides one stream layer packet for each media stream to a data processor 608 for each super-frame. The data processor 608 also receives embedded overhead information from a controller 612 for each media logical channel and appends the overhead information to the appropriate stream layer packet for that media logical channel. The data processor 608 then processes each stream layer packet in accordance with a "mode" for that stream to generate a corresponding data symbol stream. The mode for each media stream identifies, for example, the code rate, the modulation scheme, and so on, for the media stream. As used herein, a data symbol is a modulation symbol for data, an overhead symbol is a modulation symbol for overhead information, a pilot symbol is a modulation symbol for a pilot, and a modulation symbol is a complex value for a point in a signal constellation used for a modulation scheme (e.g., M-PSK, M-QAM, and so on).

The data processor 608 also receives composite overhead information to be sent at the start of each super-frame from the controller 612. The data processor 608 processes the composite overhead information in accordance with a mode for the composite overhead information to produce a stream of overhead symbols. The mode used for the composite overhead information is typically associated with, a lower code rate and/or a lower order modulation scheme than that used for the media streams to ensure robust reception of the composite overhead information.

A channclizcr 614 multiplexes the data, overhead, and pilot symbols into time slots within the super-frame. The time slots are assigned by a scheduler 610. An OFDM modulator 616 converts the composite symbol stream into N parallel streams and performs OFDM modulation on each set of N symbols to produce a stream of OFDM symbols to an analog front end (APE) 606. The AFE 606 conditions (e.g., converts to analog, filters, amplifies, and frequency upconverts) the OFDM symbol stream and generates a modulated signal that is broadcast from an antenna 618.

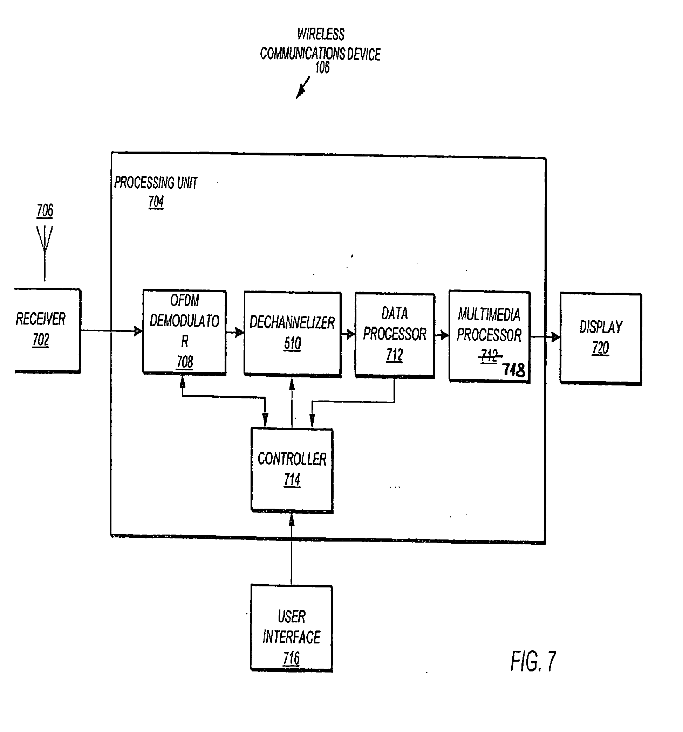

FIG. 7 is a block diagram illustrating an example of a wireless communications device. The wireless communications device 106 includes a receiver 702, a processing unit 704, a user interface 716, and a display 720.

The processing unit 704 is shown with various blocks to illustrate its functionality. These functional blocks may be implemented in hardware, software, firmware, middleware, microcode, hardware description languages, or any combination thereof. Each functional block may be implemented separately, integrated witch one or more functional blocks, or integrated with one or more other entities not shown.

When implemented in hardware, either in whole or part, the processor may be implemented within one or more application specific integrated circuits (ASICs), digital signal processors (DSPs), digital signal processing devices (DSPDs), programmable logic devices (PLDs), field programmable gate arrays (FPGAs), controllers, microcontrollers, state machines, discrete gate or transistor logic, discrete hardware components, or any combination thereof to perform some or all of the processor functions described herein.

When implemented in software, firmware, middleware or microcode, in whole or part, the processor may be implemented with a special purpose or general purpose computer, and may also include computer-readable media for carrying or having program code or instructions that, when executed, performs some or all of the processor functions described herein. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where "disks" usually reproduce data magnetically, while "discs" reproduce data optically with lasers. Combinations of the above should also be included within the scope of computer-readable media.

Referring to FIG. 7, an antenna 706 receives the modulated signal broadcast by the transmitter in the distribution network and provides the received signal to the receiver 702. The receiver 702 conditions, digitizes, and processes the received signal and provides a sample stream to an OFDM demodulator 708. The OFDM demodulator 708 performs OFDM demodulation on the sample stream to recover the data, overhead, and pilot symbols. A controller 714 derives a channel response estimate for the wireless link between the transmitter 600 (see FIG. 6) and the wireless communications device 106 based on the received pilot symbols. The OFDM demodulator 708 further performs coherent detection (e.g., equalization or matched filtering) on the received data and overhead symbols with the channel response estimate and provides to a dechannelizer 710 estimates of the data and overhead symbols.

The controller 714 receives a selection from the user interface 716 for a service. The controller 714 then determines the time slot assignment for the media logical channel currying the service based on the composite overhead information broadcast at the start of the current super-frame The controller 714 then provides a control signal to the dechannelizer 710. The dechannelizer 710 performs demultiplexing of the data and overhead symbol estimates and provides the demultiplexed data and overhead symbol estimates to a data processor 712. The data processor 712 processes (e.g., symbol demaps, deinterleaves, and decodes) the overhead symbol estimates in accordance with the mode used for the composite overhead information and provides the processed overhead information to the controller 714. The data processor 712 also processes the data symbol estimates for the media logical channel carrying the service selected by the user, in accordance with the mode used for each stream, and provides a corresponding processed data stream to a decoder 718.

The multimedia processor 718 enables a decoder for each media stream in the media logical channel selected by the user. By way of example, a typical service may provide a signaling stream, video stream and audio stream. In this example, the multimedia processor 718 may enable a decoder for each. In the case of a video stream, the decoder performs the inverse processing functions of the video encoder described earlier in connection with FIG. 2. Initially, the video decoder searches the video stream for an I-frame to begin decoding. In video streams employing a GOP layer, the video decoder searches for the header of a GOP and begins decoding with the first video frame following the GOP header. Alternatively, or in addition to, the video decoder can search for a RAP signal in the headers of the video frames to locate an I-frame. Once an I-frame is located in the video stream, the decoder begins decoding video frames on a macroblock-by-macroblock basis.

The decoding process is used to recover the transform coefficients for each macroblock. The transform coefficients arc inverse quantized and inverse transformed to extract the residual information for each macroblock in the video frames following an I-frame. Using the motion vectors to retrieve information from memory for the corresponding macroblocks in a reference frame, the pixel information for the video frame can be recovered. The pixel information for the video frame is presented to the display 720 for viewing by the user.

The user interface 716 may allow a user to surf channels of multimedia content on the wireless communications 106. When a user is channel surfing, or merely selecting a new channel, the controller 714 uses the composite overhead information broadcast at the start of the next super-frame to locate the media logical channel for the new service selected by the user. The controller 714 then switches the channel by prompting the dechannelizer 710 to select the data and overhead symbol estimates for the media streams contained in the new media logical channel and provide the selected symbol estimates to the data and multimedia processors 712 and 718. The multimedia processor 718 then searches the video stream for an I-frame to begin the decoding process, which may result in an undesirable delay in presenting new content to the display 712.

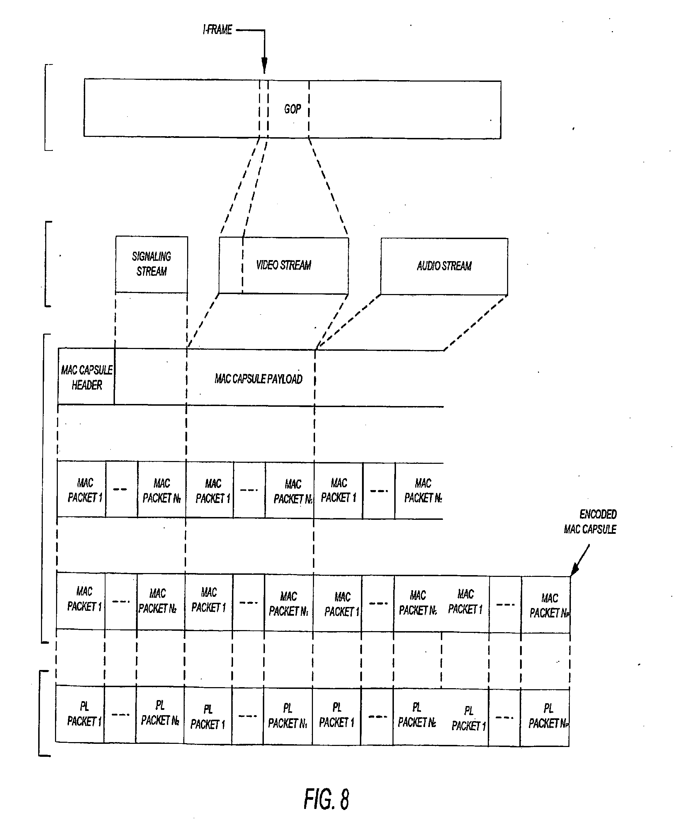

Various techniques may be employed to reduce or eliminate this delay. By way of example, a broadcast scheme may be implemented wherein the timing of the I-frames is known, *a priori,* by the wireless communications device 106. The timing of the I-frames may be determined in a number of ways. One way is to synchronize the application layer to the physical layer. Referring to FIG. 8, an I-frame can be inserted at the beginning of the video stream layer packet in the media logical channel for each super-frame, which may require the video encoder to generate additional I-frames for each GOP. With this approach, the location of an I-frame at the physical layer is known. Specifically, the I-frame is carried in one or more physical layer packets following the N₀ physical layer packet. In this example, the controller 714 delays switching to a new channel until just before the arrival of the first physical layer packet following the N₀ physical layer packet in the media logical channel carrying the new service selected by the user. This enable the multimedia processor 718 to begin dccoding the video stream immediately after the channel switch to provide to the user on the display 712 what appears to be an instantaneous change of channel.

In an alternative configuration of the multimedia processor 718, the timing of the I-frames for each service can be broadcast in an overhead channel. By way of example, the overhead information 406 (see FIG. 4) in the super-frame may include the location of an I-frame in each media logical channel. In this example, the controller 714 can access the composite overhead information to locate the media logical channel carrying the new service selected by the user and, at the same time, determine the location of an I-frame. Once the timing of the I-frame is determined, the controller 714 can delay switching to the new channel until just before the arrival of the I-frame, thus enabling the multimedia processor 718 to begin decoding the video stream immediately after the channel switch. Preferably, an I-frame for each media logical channel is included in every super-frame to reduce channel switching time, however this is not required.

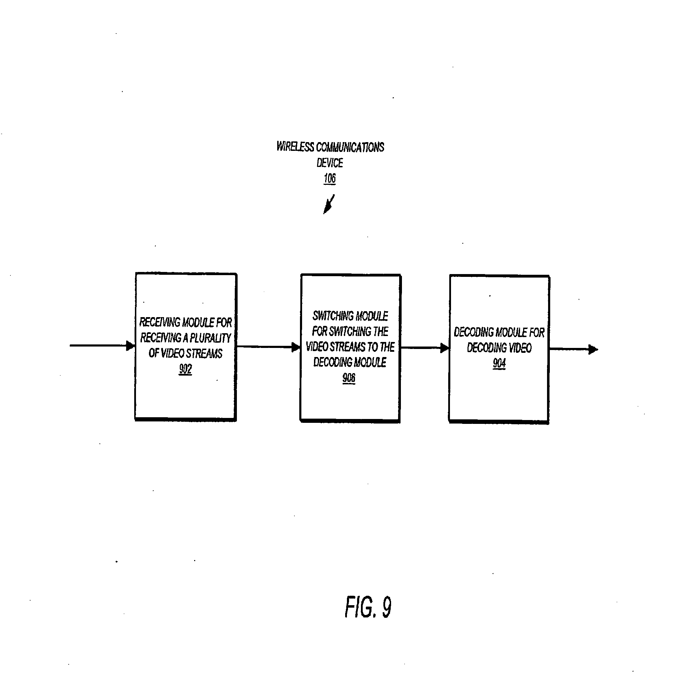

FIG. 9 is a block diagram illustrating an example of the functionality of a wireless communications device. The wireless communications device 106 includes a receiving module 902 for receiving a plurality of video streams each comprising intra-coded and inter-coded video frames and a decoding module 904 for decoding video. The wireless communications device 106 also includes a switching module 906 for switching the video streams to the decoding means. The switching module 906 is further configured to receive a prompt to switch from a first one of the video streams to a second one of the video streams, and in response to the prompt, delay switching to the second one of the video streams until an intra-coded video frame is received in the second one of the video streams.

The previous description is provided to enable any person skilled in the art to practice the various embodiments described herein. Various modifications to these embodiments will be readily apparent to those skilled in the art, and the generic principles defined herein may be applied to other embodiments. Thus, the claims are not intended to be limited to the embodiments shown herein, but is to be accorded the full scope consistent with the language claims, wherein reference to an element in the singular is not intended to mean "one and only one" unless specifically so stated, but rather "one or more." Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. A wireless communications device (106), comprising:
receiving means (902) for receiving a plurality of video streams each comprising intra-coded and inter-coded video frames; wherein each of the plurality of video streams is assigned a media logical channel within a super-frame (400);
decoding means (904) for decoding video; and
switching means (906) for switching the video streams to the decoding means, the switching means being configured to receive a prompt to switch from a first one of the video streams to a second one of the video streams;
wherein the receiving means is configured to receive on an overhead channel a broadcast of the timing of an intra-coded frame in the second one of the video streams; wherein the overhead channel is included in a composite overhead information (406) indicating the specific location of each media logical channel within the super-frame (400); and
wherein the switching means is further configured to determine the timing of the intra-coded frame in the second one of the video streams from the broadcast, and in response to the prompt, to delay switching to the second one of the video streams until an intra-coded video frame is received in the second one of the video streams based on said determined timing.

2. The wireless communications device of claim 1, wherein
the receiving means is a receiver;
the decoding means is a video decoder; and
the switching means is a processing unit.

3. The wireless communications device of claim 1 wherein the video streams are broadcast on a physical channel, and wherein the delay in switching to the second one of the video streams is based on the location of an intra-coded frame in the second one of the video streams on the physical channel.

4. The wireless communications device of claim 3 wherein each of the video streams is assigned a logical channel on the physical channel, and wherein the delay in switching to the second one of the video streams is based on the location of an intra-coded frame in the logical channel for the second one of the video streams.

5. The wireless communications device of claim 4 wherein the location of an intra-coded frame in the logical channel for the second one of the video streams is known by the processing unit.

6. The wireless communications device of claim 4 wherein the processing unit is further configured to determine the location of the intra-coded frame in the logical channel for the second one of the video streams.

7. The wireless communications device of claim 6 wherein the receiver is further configured to receive a broadcast of the location of the intra-coded frame in the second one of the video streams, the processing unit being further configured to determine the location of the intra-coded frame in the second one of the video streams from the broadcast.

8. A method of communications, comprising:
receiving a plurality of video streams each comprising intra-coded and inter-coded video frames; wherein each of the plurality of video streams is assigned a media logical channel within a super-frame (400);
decoding a first one of the video streams;
receiving on an overhead channel a broadcast of a timing of an intra-coded frame in the second one of the video streams; wherein the overhead channel is included in a composite overhead information (406) indicating the specific location of each media logical channel within the super-frame (400);
determining from the broadcast the timing of the intra-coded frame in the second one of the video streams;
receiving a prompt to decode a second one of the video streams;
and
in response to the prompt, delaying switching to the second one of the video streams to decode until the intra-coded video frame is received in the second one of the video streams based on said determined timing.

9. A computer program product causing a computer to implement the method of claim 8 when run on said computer.

## Patentansprüche

1. Ein drahtloses Kommunikationsgerät (106) aufweisend:
Empfangsmittel (902) zum Empfangen einer Vielzahl von Videoströmen, wobei jeder Videostrom "intra"-codierte und "inter"-codierte Videorahmen umfasst; wobei jedem der Vielzahl der Videoströme ein logischer Medium-Kanal innerhalb eines Superrahmens (400) zugewiesen wird;
Entschlüsselungsmittel (904) zum Decodieren von Video;
und
Schaltmittel (906) zum Schalten der Videoströme an das Entschlüsselungsmittel, wobei das Entschlüsselungsmittel betriebsbereit ist, um eine Aufforderung zu empfangen, zum Schalten von einem ersten der Videoströme zu einem zweiten der Videoströme;
wobei das Empfangsmittel betriebsbereit ist, zum Empfangen auf einem Überschusskanal eines Rundrufs der Zeitzählung eines "intra"-codierten Rahmens in dem zweiten der Videoströme; wobei der Überschusskanal in kombinierten Überschussinformationen (406) enthalten ist, die die spezifische Stelle jedes logischen Medium-Kanals innerhalb des Superrahmens (400) anzeigen; und
wobei das Schaltmittel ferner betriebsbereit ist, zum Ermitteln der Zeitzählung des "intra"-codierten Rahmens in dem zweiten der Videoströmen von dem Rundruf, und in Antwort auf die Aufforderung, zum Verzögern des Schaltens an den zweiten der Videoströmen auf Basis der ermittelten Zeitzählung bis ein "intra"-codierter Rahmen in dem zweiten der Videoströme empfangen wird.

2. Drahtloses Kommunikationsgerät nach Anspruch 1, wobei das Empfangsmittel ein Empfänger ist;
das Entschlüsselungsmittel ein Videodecodierer ist; und
das Schaltmittel eine Verarbeitungseinheit ist.

3. Drahtloses Kommunikationsgerät nach Anspruch 1, wobei die Videoströme als Rundruf auf einen physikalischen Kanal übertragen werden, und wobei die Verzögerung beim Schalten an den zweiten der Videoströme auf die Position eines "intra"-codierten Rahmens in dem zweiten der Videoströme auf dem physikalischen Kanal basiert.

4. Drahtloses Kommunikationsgerät nach Anspruch 3, wobei jeder der Videoströme einem logischen Kanal auf dem physikalischen Kanal zugewiesen wird, und wobei die Verzögerung beim Schalten an den zweiten der Videoströme auf die Position eines "intra"-codierten Rahmens in dem logischen Kanal für den zweiten der Videoströme basiert.

5. Drahtloses Kommunikationsgerät nach Anspruch 4, wobei die Position eines "intra"-codierten Rahmens auf dem logischen Kanal für den zweiten der Videoströme der Verarbeitungseinheit bekannt ist.

6. Drahtloses Kommunikationsgerät nach Anspruch 4, wobei die Verarbeitungseinheit ferner zum Ermitteln der Position des "intra"-codierten Rahmens auf dem logischen Kanal für den zweiten der Videoströme betriebsbereit ist.

7. Drahtloses Kommunikationsgerät nach Anspruch 6, wobei der Empfänger ferner betriebsbereit ist, zum Empfangen eines Rundrufs bezüglich der Position des "intra"-codierten Rahmens in dem zweiten der Videoströme, wobei die Verarbeitungseinheit ferner zum Ermitteln der Position des "intra"-codierten Rahmens in dem zweiten der Videoströme aus dem Rundruf betriebsbereit ist.

8. Kommunikationsverfahren aufweisend:
Empfangen einer Vielzahl von Videoströmen, wobei jeder Videostrom "intra"-codierte und "inter"-codierte Videorahmen umfasst; wobei jedem der Vielzahl der Videoströmen eines logischen Medium-Kanal innerhalb eines Superrahmens (400) zugewiesen wird;
Entschlüsseln eines ersten der Videoströme;
Empfangen auf einem Überschusskanal einen Rundruf der Zeitzählung eines "intra"-codierten Rahmens in dem zweiten der Videoströme; wobei der Überschusskanal in kombinierten Überschussinformationen (406) enthalten ist, die die spezifische Stelle jedes logischen Medium-Kanals innerhalb des Superrahmens (400) anzeigen;
Ermitteln der Zeitzählung des "intra"-codierten Rahmens in dem zweiten der Videoströme;
Empfangen einer Aufforderung zum Entschlüsseln eines zweiten der Videoströme; und
in Antwort auf die Aufforderung, Verzögern des Schaltens an den zweiten der Videoströme zum Entschlüsseln bis dem "intra"-codierten Rahmen in dem zweiten der Videoströme basierend auf der ermittelten Zeitzählung empfangen wird.

9. Ein Computerprogramprodukt, das betriebsbereit ist, um einen Computer zum Durchführen des Verfahrens nach Anspruch 8 zu bringen, wenn es auf dem Computer ausgeführt wird.

## Revendications

1. Dispositif de communication sans fil (106), comportant :
des moyens de réception (902) pour recevoir une pluralité de flux vidéo chacun comportant des trames vidéo intra-codées et inter-codées ; dans lequel à chaque flux de la pluralité de flux vidéo est attribué un canal logique de support dans une super trame (400) ;
des moyens de décodage (904) pour décoder une vidéo ; et
des moyens de commutation (906) pour commuter les flux vidéo sur les moyens de décodage, les moyens de commutation étant configurés pour recevoir une invitation à commuter depuis un premier des flux vidéo sur un second des flux vidéo ;
dans lequel les moyens de réception sont configurés pour recevoir sur un canal de surdébit une diffusion de la synchronisation d'une trame intra-codée dans le second des flux vidéo ; dans lequel le canal de surdébit est inclus dans des informations de surdébit composites (406) indiquant l'emplacement spécifique de chaque canal logique de support dans la super trame (400) ; et
dans lequel les moyens de commutation sont en outre configurés pour déterminer la synchronisation de la trame intra-codée dans le second des flux vidéo à partir de la diffusion, et en réponse à l'invitation, pour retarder la commutation sur le second des flux vidéo jusqu'à ce qu'une trame vidéo intra-codée soit reçue dans le second des flux vidéo sur la base de ladite synchronisation déterminée.

2. Dispositif de communication sans fil selon la revendication 1, dans lequel :
les moyens de réception sont un récepteur ;
les moyens de décodage sont un décodeur vidéo ; et
les moyens de commutation sont une unité de traitement.

3. Dispositif de communication sans fil selon la revendication 1, dans lequel les flux vidéo sont diffusés sur un canal physique, et dans lequel le retard de commutation sur le second des flux vidéo est basé sur l'emplacement de la trame intra-codée dans le second des flux vidéo sur le canal physique.

4. Dispositif de communication sans fil selon la revendication 3, dans lequel à chacun des flux vidéo est attribué un canal logique sur le canal physique, et dans lequel le retard pour commuter sur le second des flux vidéo est basé sur l'emplacement d'une trame intra-codée dans le canal logique pour le second des flux vidéo.

5. Dispositif de communication sans fil selon la revendication 4, dans lequel l'emplacement d'une trame intra-codée dans le canal logique pour le second des flux vidéo est connu par l'unité de traitement.

6. Dispositif de communication sans fil selon la revendication 4, dans lequel l'unité de traitement est en outre configurée pour déterminer l'emplacement de la trame intra-codée dans le canal logique pour le second des flux vidéo.

7. Dispositif de communication sans fil selon la revendication 6, dans lequel le récepteur est en outre configuré pour recevoir une diffusion de l'emplacement de la trame intra-codée dans le second des flux vidéo, l'unité de traitement étant en outre configurée pour déterminer l'emplacement de la trame intra-codée dans le second des flux vidéo à partir de la diffusion.

8. Procédé de communication, comportant les étapes consistant à :
recevoir une pluralité de flux vidéo chacun comportant des trames vidéo intra-codées et inter-codées ; dans lequel à chaque flux parmi la pluralité de flux vidéo est attribué un canal logique de support dans une super trame (400) ;
décoder un premier des flux vidéo ;
recevoir sur un canal de surdébit une diffusion d'une synchronisation d'une trame intra-codée dans le second des flux vidéo ; le canal de surdébit étant inclus dans une information de surdébit composite (406) indiquant l'emplacement spécifique de chaque canal logique de support dans la super trame (400) ;
déterminer à partir de la diffusion la synchronisation de la trame intra-codée dans le second des flux vidéo ;
recevoir une invitation à décoder un second des flux vidéo ; et
en réponse à l'invitation, retarder la commutation sur le second des flux vidéo en vue d'un décodage jusqu'à ce que la trame vidéo intra-codée soit reçue dans le second des flux vidéo sur la base de ladite synchronisation déterminée.

9. Produit de programme informatique amenant un ordinateur à mettre en oeuvre le procédé selon la revendication 9 lorsque exécuté sur ledit ordinateur.
